# EUROPÄISCHE PATENTSCHRIFT

(11) **EP 3 009 221 B1**
(45) Veröffentlichungstag und Bekanntmachung des Hinweises auf die Patenterteilung: **29.04.2020**
(21) Anmeldenummer: 15181748.3
(22) Anmeldetag: 20.08.2015
(51) Int. Cl.: B23K 11/11, B23K 11/31, B23K 11/36, B23K 11/24, B23K 11/30

(54) **WIDERSTANDSSCHWEISSVORRICHTUNG**
RESISTANCE WELDING DEVICE
DISPOSITIF DE SOUDAGE PAR RÉSISTANCE

(30) Priorität: 27.08.2014 DE 102014217079
(43) Veröffentlichungstag der Anmeldung: 20.04.2016
(73) Patentinhaber: Otto Bihler Handels-Beteiligungs-GmbH, 87642 Halblech (DE)
(72) Erfinder: Köpf, Johann, 87642 Halblech (DE); Haußmann, Bernd, 87645 Waltenhofen-Schwangau (DE); Wörle, Matthias, 86983 Lechbruck (DE); Ott, Martin, 87672 Rosshaupten (DE)
(74) Vertreter: Tiesmeyer, Johannes

(56) Entgegenhaltungen:
- DE-A1- 4 432 573
- DE-A1- 19 738 647

## Beschreibung

Die Erfindung betrifft eine Widerstandsschweißvorrichtung, umfassend zwei einander gegenüberliegend angeordnete, an einer Schweißstromquelle über einen jeweiligen Stromversorgungsweg angeschlossene Schweißelektroden zum Schweißen von Schweißgut, das zwischen den Elektroden anzuordnen ist, wobei wenigstens eine der Elektroden mittels einer Zustelleinrichtung relativ zu der anderen Elektrode aus einer Elektrodendistanzstellung in eine Schweißstellung bewegbar ist, um Schweißgut zwischen den Elektroden mit einer Kraft zu beaufschlagen und dabei zu verschweißen, wobei die Zustelleinrichtung ein zur Bewegung der bewegbaren Elektrode zwischen der Elektrodendistanzstellung und der Schweißstellung mittels einer Führungsanordnung bewegbar geführtes Schubelement und einen mittels einer Steuereinrichtung steuerbaren Motor, insbesondere Elektromotor, als Bewegungsantriebsmittel für das Schubelement aufweist und wobei die bewegbare Elektrode an dem Schubelement befestigt ist.

Derartige Widerstandsschweißvorrichtungen werden z. B. zum Punktschweißen oder Buckelschweißen oder Kontaktschweißen herangezogen.

Widerstandsschweißvorrichtungen der hier betrachteten Art können z. B. stationäre Schweißvorrichtungen sein. Stationäre Widerstandsschweißvorrichtungen haben üblicherweise einen Rahmen mit zwei Haltearmen, an denen die Schweißelektroden vorgesehen sind. An einem der Haltearme ist die bewegbare Elektrode mit ihrer Zustelleinrichtung angeordnet, wohingegen an dem anderen Haltearm mittels einer Elektrodenhaltevorrichtung die betreffende Gegenelektrode vorgesehen ist. Diese Gegenelektrode ist meistens rahmenfest fixiert, kann jedoch in speziellen Ausführungsformen ebenfalls bewegbar ausgestaltet sein. Eine Schweißstromquelle dient zur Bereitstellung des Schweißstroms und umfasst üblicherweise einen Schweißtransformator. Es sind diverse verschiedene Schweißstromquellentypen bekannt, z. B. Wechselstromquellen, Gleichstromquellen und Kondensatorentladestromquellen. Jede dieser Stromquellen kann bei einer Widerstandsschweißvorrichtung der vorliegenden Erfindung Anwendung finden.

Weiterhin haben Widerstandsschweißvorrichtungen der hier betrachteten Art eine Steuereinrichtung. Die Steuereinrichtung kontrolliert die Fertigungsabläufe und dient zur Einstellung bzw. Regelung des Schweißstroms, der von den Elektroden auf das Schweißgut ausgeübten Elektrodenkraft, der Steuerung der Prozesszeiten, des Transports des Schweißgutes, usw. Insbesondere synchronisiert die Steuereinrichtung den zeitlichen Verlauf von Schweißstrom und Elektrodenkraft mit den erforderlichen Maschinenabläufen. Widerstandsschweißvorrichtungen können als Handarbeitsplätze definiert sein, wobei eine Bedienungsperson die Zuführung des Schweißgutes zwischen den Elektroden vornimmt und den Schweißvorgang auslöst. Bei den hier betrachteten Widerstandsschweißvorrichtungen handelt es sich jedoch vorzugsweise um automatisierte Systeme für die Massenproduktion, wobei Schweißgutzuführeinrichtungen für kontinuierliche oder getaktete Zuführung des Schweißgutes in Zuordnung zum Schweißtakt automatisch sorgen. Bei dem Schweißgut kann es sich z. B. um miteinander zu verbindende Blechteile, Drahtabschnitte u. dgl. handeln. Auch das Aufschweißen von Kontaktmaterial auf Kontaktträgerflächen oder das Aufschweißen von Kabelenden auf Blechteilen ist durch Widerstandsschweißen mittels einer Widerstandsschweißvorrichtung im Massenproduktionsverfahren möglich.

Beim Punktschweißen oder Buckelschweißen und auch beim Aufschweißen von Kontaktmaterial auf Trägerblechen kommt es in der Massenfertigung von Präzisionsteilen auf eine präzise Einhaltung der vorgegebenen Prozessparameter, wie Schweißstrom, Elektrodenkraft, Schweißdauer usw. an.

Für die Herstellung präziser Schweißverbindungen ist insbesondere auch ein gut definierter Zustellvorgang bei der Zustellung der Schweißelektroden zum Schweißgut wichtig. Dabei sollte die bewegliche Elektrode möglichst stoß- und prellfrei auf das Schweißgut aufsetzen und beim Aufweichen des Schweißgutes an der Schweißstelle definiert nachsetzen. Besonders für das Widerstandsbuckelschweißen oder das Aufschweißen von Kontaktmaterial wird eine hohe Nachsetzgeschwindigkeit gefordert, um den zusammenbrechenden Buckel bzw. das schmelzende Kontaktmaterial sicher zu fügen und punktförmige Verbindungen mit Schweißverbindungen hoher Qualität zu erzielen. Maßgebend für die Qualität der entstehenden Schweißverbindungen sind neben der präzisen Steuerung des Schweißstromes auch die dynamisch-mechanischen Maschineneigenschaften, wozu wesentlich auch das Nachsetzverhalten der Elektrodenzustelleinrichtung bzw. Elektrodenkrafteinheit beiträgt. Häufig ist im Kraftübertragungsweg des Schubelementes der Zustelleinrichtung zur beweglichen Elektrode eine Federanordnung vorgesehen, die auch als Nachsetzfeder bezeichnet wird und ein dynamisches Nachführen der Elektrode während des Schweißvorgangs unter gut reproduzierbaren Bedingungen ermöglicht.

Das dynamisch-mechanische Verhalten der Zustelleinrichtung bisher bekannter Widerstandsschweißvorrichtungen der hier betrachteten Art ist insbesondere auch durch Schweißstromkabel beeinflusst, die von der Schweißstromquelle zu den Elektroden geführt sind und bei der Zustellung der bewegbaren Elektrode(n) stets mitbewegt werden müssen. Da die Schweißstromkabel relativ große Leiterquerschnitte aufweisen müssen, um die hohen Schweißströme leiten zu können, und daher als nur bedingt flexible Anhängsel der Elektroden die Trägheit der Zustelleinrichtung bei der Bewegung der bewegbaren Schweißelektrode(n) unkontrolliert beeinflussen, wird die Kontrolle der Zustellbewegung der Elektrode(n) einschließlich des Nachsetzvorganges erschwert, was sich in einer unzureichenden Reproduzierbarkeit der Schweißergebnisse widerspiegelt Ferner erfordert das Mitbewegen des relativ massiven Schweißstromkabels mit der bewegbaren Schweißelektrode die Bereitstellung zusätzlicher Kraftreserven der Zustelleinrichtung. Aus DE 44 32 573 A1 und der DE 197 38 647 A1 sind jeweils Widerstandsschweißvorrichtungen entsprechend dem Oberbegriff des Anspruchs 1 bekannt.

Der Erfindung liegt die Aufgabe zugrunde, eine Widerstandsschweißvorrichtung der eingangs genannten Art bereitzustellen, bei der die vorstehend genannten Nachteile des Standes der Technik zumindest weitgehend überwunden sind und insbesondere ein gut kontrollierbarer und reproduzierbarer Zustellvorgang beim Zustellen der Elektrode(n) zum Schweißgut möglich ist, um ein gutes Schweißergebnis auch in der Massenfertigung zu erzielen.

Zur Lösung dieser Aufgabe wird eine Widerstandsschweißvorrichtung mit den Merkmalen des Anspruchs 1 vorgeschlagen, nämlich eine Widerstandsschweißvorrichtung der eingangs genannten Art, bei der das Schubelement als Schweißstrom leitende Komponente ausgebildet und in den Stromversorgungsweg zwischen der Schweißstromquelle und der bewegbaren Elektrode eingegliedert ist, wobei auch die Führungsanordnung als Schweißstrom leitende Komponente ausgebildet und in den Stromversorgungsweg zwischen der Schweißstromquelle und der bewegbaren Elektrode, nämlich zwischen der Schweißstromquelle und dem Schubelement eingegliedert ist.

Die Überlegung, das Schubelement als Schweißstrom leitende Komponente auszubilden, führte zu dem Ergebnis, dass zu der bewegbaren Elektrode kein Schweißstromkabel geführt und daher auch nicht unmittelbar mit der bewegbaren Schweißelektrode mitbewegt werden muss. Ein weiterer Vorteil besteht darin, dass die bisher übliche Platz greifende Schweißstromkabelführung bis in die unmittelbare Nähe der Schweißelektrode nicht mehr erforderlich ist. Vorzugsweise ist die Zustelleinrichtung so gestaltet, dass der Schweißstrom so durch sie hindurchgeführt wird, dass überhaupt kein Schweißstromkabel vorgesehen ist, welches von der Zustelleinrichtung mit dem Schubelement bzw. der daran vorgesehenen Elektrode mitzubewegen wäre. Dies lässt sich z. B. dadurch erreichen, dass auch die Führungsanordnung als Schweißstrom leitende Komponente ausgebildet und in den Stromversorgungsweg zwischen der Schweißstromquelle und der bewegbaren Elektrode, nämlich zwischen der Schweißstromquelle und dem Schubelement eingegliedert ist. Möglich ist auch eine Ausführungsform der Erfindung gemäß welcher das Schubelement über eine mitbewegte Gleitkontaktanordnung mit einer beim Schweißvorgang Schweißstrom führenden und unbewegten Fläche der Zustelleinrichtung, insbesondere Gehäuseinnenfläche, elektrisch verbunden ist. Der Schweißstrom lässt sich z. B. mittels elektrisch leitender Schleifkontakte oder Bürsten, z.B. Kohlebürsten, zu dem Schubelement führen.

Hinsichtlich der elektrisch leitenden Führungsanordnung oder Gleitkontaktanordnung kann zwischen der Führungsanordnung und dem Schubelement eine elektrisch leitende Schmiermasse, z. B. ein Graphitfett, vorgesehen sein.Die genannten Maßnahmen zur Stromübertragung erlauben es, auf bewegte Schweißstromkabel komplett zu verzichten. Da keine Schweißstromkabel als mitzubewegende Anhängsel der bewegbaren Elemente der Zustelleinrichtung einschließlich der Elektrode vorgesehen sind, sind die dynamischen Eigenschaften der Zustelleinrichtung im Vergleich zu den Widerstandsschweißvorrichtungen nach dem Stand der Technik wesentlich besser kontrollierbar, was sich auf das Schweißergebnis in positiver Weise auswirkt.

Vorzugsweise weist das Schubelement eine Federanordnung im Kraftübertragungsweg zur beweglichen Elektrode auf. Dies kann eine sog. Nachsetzfeder sein. Gemäß einer Weiterbildung der Erfindung ist auch die Federanordnung als Schweißstrom leitende Komponente im Stromversorgungsweg zwischen der Schweißstromquelle und der bewegbaren Elektrode vorgesehen. Ein die Federdynamik beeinflussendes Stromkabel ist auch an dieser Stelle überflüssig, da die Feder selbst den Schweißstrom leiten kann. Hieraus ergibt sich, dass das Nachsetzen mit vergleichsweise sehr geringer Trägheit gut reproduzierbar funktioniert, da die mittels der Nachsetzungsanordnung nachzuführende Masse sehr klein gehalten werden kann im Vergleich mit bekannten Widerstandsschweißvorrichtungen, bei denen ein Schweißstromkabel zur bewegbaren Elektrode geführt ist.
Gemäß einer bevorzugten Ausführungsform der Erfindung umfasst die Zustelleinrichtung ein Fluidkühlsystem, insbesondere ein Wasserkühlsystem mit Fluidleitungskanälen zur Kühlung der bewegbaren Elektrode, des Schubelementes, des Motors und ggf. der Federanordnung.

Bei dem Motor handelt es sich vorzugsweise um einen Elektromotor, wenngleich auch z. B. mit pneumatischen Aktuatoren als Antriebsmittel des Schubelementes ausgestattete Lösungen denkbar sind. Besonders bevorzugt kommt als Elektromotor ein NC-gesteuerter Elektromotor in Frage.

Das Schubelement umfasst gemäß einer Ausführungsform der Erfindung eine entlang einer Zustellachse der Zustelleinrichtung linear verschiebbare Komponente, insbesondere eine Spindelmutter eines von dem Elektromotor angetriebenen Spindel-Mutter-Getriebes. Die oben genannte Federanordnung kann in Reihe zwischen der linear verschiebbaren Komponente des Spindel-Mutter-Getriebes und der bewegbaren Elektrode längs der Zustellachse in dem Schubelement angeordnet sein und eine elastische Bewegung der Elektrode relativ zu der linear verschiebbaren Komponente des Spindel-Mutter-Getriebes ermöglichen.

Es sei darauf hingewiesen, dass auch Ausführungsformen von Widerstandsschweißvorrichtungen zur Erfindung gehören können, bei denen das Schubelement über ein flexibles Kabel, insbesondere bandförmigen Stromleiter aus Dünnblechen oder Litzen, mit der Schweißstromquelle verbunden ist. Die Verbindung sollte in einem solchen Fall jedoch an der der bewegbaren Schweißelektrode entfernten Seite der Federanordnung liegen, wobei die Kabelführung so zu gestalten ist, dass die Kabelbewegung keinen unkontrollierbaren Einfluss auf die Zustellbewegungen des Schubelementes hat.

Die Erfindung wird nachstehend unter Bezugnahme auf die Figuren näher erläutert.
- Figur 1: zeigt eine rein schematische Darstellung einer stationären Widerstandsschweißvorrichtung nach der Erfindung,
- Figur 2: zeigt in perspektivischer Darstellung ein Zustellaggregat mit Schubelement und daran angeordneter Elektrode für ein Ausführungsbeispiel der Widerstandsschweißvorrichtung nach der Erfindung mit einem Spindel-Mutter-Getriebe zur Umsetzung der Drehbewegung des Motors in eine Linearbewegung des Schubelementes.
- Figur 3: zeigt eine Schnittseitenansicht des Zustellaggregates aus Figur 2.
- Figur 4: zeigt in einer schematischen Darstellung ein weiteres Ausführungsbeispiel der Erfindung.

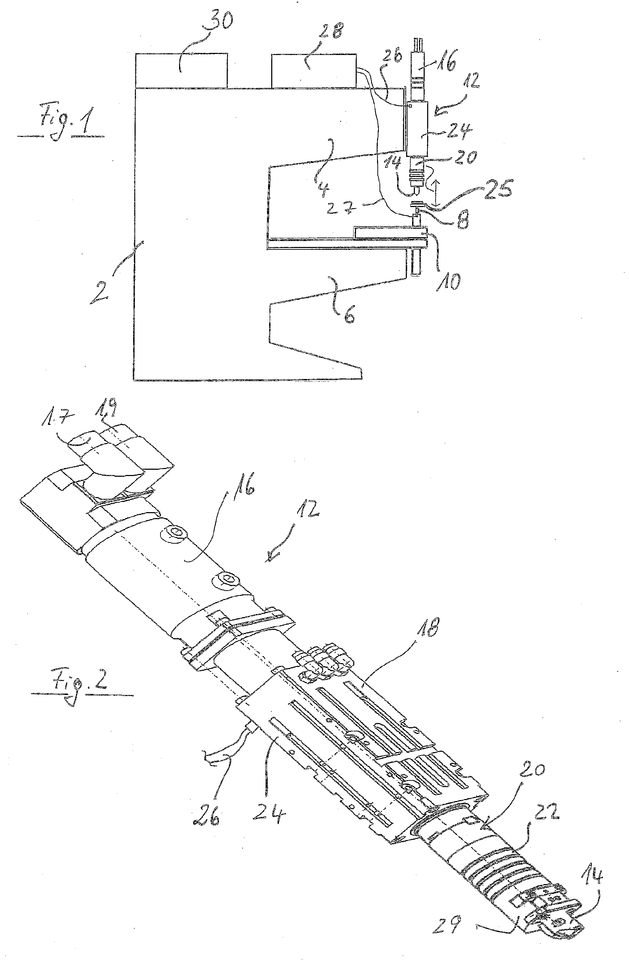

Die in Figur 1 schematisch dargestellte Widerstandsschweißvorrichtung umfasst einen Rahmen 2 mit einem oberen Haltearm 4 und einem unteren Haltearm 6. An dem unteren Haltearm 6 ist eine Schweißelektrode 8 vermittels eines Elektrodenhalters 10 rahmenfest fixiert.

An dem oberen Haltearm 4 ist eine Zustelleinrichtung 12 als ein zusammenhängendes Zustellaggregat befestigt, welches gegenüberliegend zu der fixierten Elektrode 8 eine bewegbare Elektrode 14 aufweist.

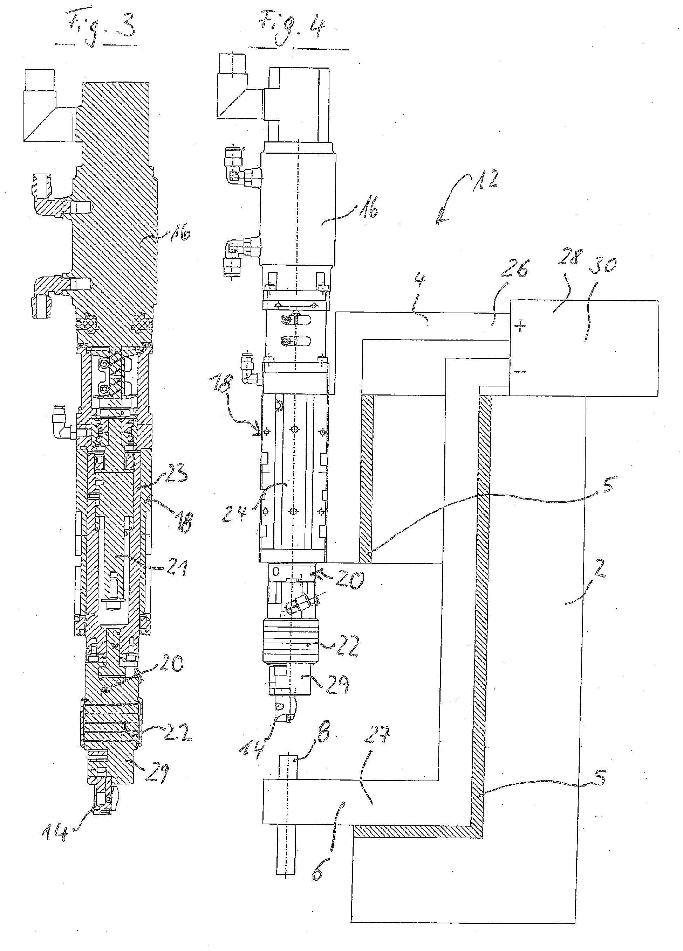

In Figur 2 ist ein Beispiel der Zustelleinrichtung 12 isoliert in perspektivischer Darstellung gezeigt. Figur 3 zeigt die Zustelleinrichtung in einer achsenthaltenden Schittseitenansicht. Sie umfasst einen NC-gesteuerten Elektromotor 16 mit Anschlüssen 17, 19 für die Motorstromversorgung, ein Spindel-Mutter-Getriebe 18 mit einer Spindel 21, die von dem NC-gesteuerten Elektromotor 16 zur Drehung antreibbar ist, um eine darauf sitzende Spindelmutter 23 gesteuert in Linearbewegung zu versetzen. Die Spindelmutter 23 gehört zu einem Schubelement 20, welches an der Linearbewegung der Spindelmutter 23 teilnimmt und an seinem von dem Motor 16 entfernten Ende die bewegbare Elektrode 14 trägt. Im Kraftübertragungsweg zwischen der Spindelmutter und der bewegbaren Elektrode 14 befindet sich eine Federanordnung 22 als Nachsetzfeder, die bei Beaufschlagung des Schweißgutes zunächst auf Druck vorgespannt wird und bei dem Schmelzvorgang des Schweißgutes zumindest teilweise entspannen kann, um somit eine gut definierte und schnelle Nachstellung der Elektrode 14 zu bewirken. Die Besonderheit der mit einer solchen Zustelleinrichtung 12 ausgestatteten Widerstandsschweißvorrichtung nach der Erfindung ist, dass der Schweißstrom zur Elektrode 14 direkt über das Schubelement 20 und die Federanordnung 22 geführt wird. Ein Schweißstromkabel ist weder an dem Schubelement 20 noch an der Elektrode 14 unmittelbar angeschlossen, sondern im Beispielsfall an dem Führungsgehäuse 24 des Spindel-Mutter-Getriebes 18. Das Schweißstromkabel zum Führungsgehäuse 24 in Figur 1 ist mit der Bezugsziffer 26 bezeichnet und in Dimension und Verlauf nur schematisch und eher symbolisch dargestellt. Das Schweißstromkabel 27 ist an der fixierten Elektrode 8 angeschossen. Die Stromführung von einer Schweißstromquelle 28 (Figur 1) zur Elektrode 14 erfolgt über das Schweißstromkabel 26, das Führungsgehäuse 24 des Spindel-Mutter-Getriebes, die Spindelmutter 23 und das Schubelement 20, wobei auch die Federanordnung 22 stromleitend ausgebildet ist. Das Spindel-Mutter-Getriebe 18 ist gegenüber dem Elektromotor 16 elektrisch isoliert. Im Beispielsfall ist das Zustellaggregat 12 auch gegenüber dem Maschinenrahmen 2 in Figur 1 elektrisch isoliert ist und sollte ferner auch durch ein isolierendes Schutzgehäuse (nicht gezeigt) nach außen isoliert sein.

Die Zustellbewegungen der Elektrode 14 zu dem zwischen den Elektroden 8, 14 in Berührung mit der unteren Elektrode 8 angeordneten Schweißgut 25 erfolgt durch den Vorschub der Spindelmutter 23 und des zugehörigen Schubelementes 20. Bei dieser Bewegung bleibt das Schweißstromkabel 26 in Ruhe und kann die Dynamik der Zustelleinrichtung 12 bei dem Zustellvorgang und auch beim Rücksetzvorgang nicht negativ beeinflussen, was zu guten und gut reproduzierbaren Schweißergebnissen auch im schnell getakteten Massenherstellungsbetrieb führt. Die von der Nachsetzfeder 22 zur Nachsetzbewegung anzutreibende Masse des Elektodenhalters 29 und der Elektrode 14 und auch die Masse der Nachsetzfeder 22 ist vorzugsweise gering und somit trägheitsarm, was schnelle und gut definierte Nachsetzbewegungen mit relativ geringem Kraftaufwand erlaubt. Die Komponenten 14, 22, 29 sollten aus diesem Grunde aus einem elektrisch gut leitenden Material mit geringer Masse bzw. geringer Dichte und vorzugsweise großer Festigkeit hergestellt sein, z.B. Aluminium- oder Kupferlegierungen. Bei dem Schweißgut kann es sich z.B. um zwei miteinander zu verschweißende Blechstreifen handeln. Auch das Aufschweißen von Kontaktmaterial auf einen Blechstreifen oder von Drahtmaterial auf Blechmaterial oder auf Drahtmaterial kann mit einer Widerstandsschweißvorrichtung nach der Erfindung durchgeführt werden.

Die Zustelleinrichtung 12 ist mit einem Wasserkühlsystem ausgestattet, dessen Kühlkanäle zu dem Elektrodenhalter 29, zu der stromführenden Federanordung 22, zu dem Spindel-Mutter-Getriebe 18 und auch zu dem Elektromotor 16 führt. Das Wasserkühlsystem ist in den Figuren nicht ausdrücklich dargestellt.

Die Stromübertragung zwischen dem Führungsgehäuse 24 des Spindel-Mutter-Getriebes und der darin geführten Spindelmutter 23 erfolgt vorzugsweise mittels eines elektrisch leitenden Graphitfettes (nicht gezeigt) am Außenumfang der Spindelmutter 23.

Alternativ oder zusätzlich könnte eine Stromübertragung auch über die Gewindespindel des Spindel-Mutter-Getriebes auf die Spindelmutter erfolgen.

Zur Steuerung der Widerstandsschweißvorrichtung ist eine in Figur 1 symbolisch dargestellte Steuereinrichtung 30 vorgesehen. Sie dient zur Steuerung und zeitlichen Koordinierung der Betriebsabläufe der Widerstandsschweißvorrichtung. Hierzu gehört die Einstellung bzw. Regelung des Schweißstromes, die Steuerung der Zustellung der bewegbaren Elektrode 14 mittels der Zustelleinrichtung 12 und der getakteten Zuführung des Schweißgutes 25 in die Schweißposition. Die Steuereinrichtung 30 kann ferner Qualitätsüberwachungsfunktionen übernehmen und überwachte Schweißbetriebsparameter speichern und archivieren.

Das Ausführungsbeispiel der Erfindung gemäß Figur 4 unterscheidet sich im Wesentlichen nur durch die Art der Schweißstromführung von dem Ausführugnsbeispiel nach Figur 1. Aus diesem Grunde sind Komponenten in Figur 4, die Komponenten in Figur 1 strukturell oder funktionell entsprechen, mit den korrespondierend gleichen Bezugszahlen gekennzeichnet, so dass zum Verständnis des Ausführungsbeispiels gemäß Figur 4 im Wesentlichen auf die vorausgegangene Beschreibung des Ausführungsbeispiels nach Figur 1 Bezug genommen werden kann und sich die folgende Beschreibung auf die Unterschiede beschränken kann.

Gemäß Figur 4 sind der untere Haltearm 6 und der obere Haltearm 4 durch elektrisch isolierendes Material 5 voneinander und gegenüber dem Rahmen 2 elektrisch isoliert. Besonderheit des Ausführungsbeispiels gemäß Figur 4 ist, dass die Haltearme 4, 6 auch als Schweißstromleiter dienen. Dabei ist die Anordnung so getroffen, dass der obere Haltearm 4 einen vergleichsweise großen Flächenkontakt zu elektrisch leitenden Außenflächenbereichen des Führungsgehäuses 24 des Spindel-Mutter-Getriebes 18, hat was in Figur 4 nicht detailliert eingezeichnet ist, sondern dadurch symbolisiert ist, dass sich die Berührungslinie zwischen dem Haltearm 4 und dem Führungsgehäuse 24 über eine große Länge erstreckt. Die Stromführung zur Elektrode 14 erfolgt somit über den Haltearm 4, das Führungsgehäuse 24, die darin geführte Spindelmutter und das davon angetriebene Schubelement 20 mit Feder 22 und Elektrodenhalter 29.

Die Stromführung zur fixierten unteren Elektrode 8 erfolgt über den unteren Haltearm 6. Die Haltearme 4, 6 sind aus einem elektrisch gut leitenden und mechanisch stabilen Material gebildet, z.B. aus einer Kupfer- oder einer Aluminiumlegierung.

Die Haltearme 4, 6 haben ausreichend große Leitungsquerschnitte für einen problemlosen Transport der für den Schweißvorgang hohen Ströme. Ferner sollte die Geometrie der Haltearme 4, 6 so gewählt sein, dass sie kurze Stromtransportstrecken bilden.

Die Schweißstromquelle 28 und die Steuereinrichtung 30 sind in Figur 4 als in einem gemeinsamen Gehäuse untergebracht dargestellt. Mit + und - sind die Anschlusspolaritäten der Schweißstromquelle bezeichnet. Diese Anschlusspolaritäten bleiben im Falle eines Gleichstromschweißsystems erhalten. Falls die Widerstandsschweißvorrichtung als Wechselstromschweißsystem ausgebildet sein soll, so ist bei einer entsprechend angepassten Schweißstromquelle eine wechselnde Schweißstrompolarität an den betreffenden Anschlüssen vorhanden.

Allgemein sei noch darauf hingewiesen, dass als Materialien für die Schweißstrom leitenden Komponenten der Zustelleinrichtung 12 insbesondere Messinglegierungen, z.B. Bronze, sowie Aluminiumlegierungen bevorzugt infrage kommen.

## Patentansprüche

1. Widerstandsschweißvorrichtung, umfassend zwei einander gegenüberliegend angeordnete, an einer Schweißstromquelle (28) über einen jeweiligen Stromversorgungsweg angeschlossene Schweißelektroden (8, 14) zum Schweißen von Schweißgut (25), das zwischen den Elektroden (8, 14) anzuordnen ist, wobei wenigstens eine der Elektroden (14) mittels einer Zustelleinrichtung (12; 112) relativ zu der anderen Elektrode (8) aus einer Elektrodendistanzstellung in eine Schweißstellung bewegbar ist, um Schweißgut zwischen den Elektroden (8, 14) mit einer Kraft zu beaufschlagen und dabei zu verschweißen, wobei die Zustelleinrichtung (12; 112) ein zur Bewegung der bewegbaren Elektrode (14) zwischen der Elektrodendistanzstellung und der Schweißstellung mittels einer Führungsanordnung bewegbar geführtes Schubelement (20; 120) und einen mittels einer Steuereinrichtung steuerbaren Motor (16; 32), insbesondere Elektromotor, als Bewegungsantriebsmittel für das Schubelement (20; 120) aufweist und wobei die bewegbare Elektrode (14) an dem Schubelement (20; 120) befestigt ist, wobei das Schubelement (20; 120) als Schweißstrom leitende Komponente ausgebildet und in den Stromversorgungsweg zwischen der Schweißstromquelle (28) und der bewegbaren Elektrode (14) eingegliedert ist,
**dadurch gekennzeichnet, dass**
auch die Führungsanordnung als Schweißstrom leitende Komponente ausgebildet und in den Stromversorgungsweg zwischen der Schweißstromquelle und der bewegbaren Elektrode, nämlich zwischen der Schweißstromquelle und dem Schubelement eingegliedert ist.

2. Widerstandsschweißvorrichtung nach Anspruch 1, **dadurch gekennzeichnet, dass** zur verbesserten Stromübertragung zwischen der Führungsanordnung und dem Schubelement eine elektrisch leitende Bürstenanordnung, insbesondere Kohlebürstenanordnung, vorgesehen ist.

3. Widerstandsschweißvorrichtung nach Anspruch 1 oder 2, **dadurch gekennzeichnet, dass** zwischen der Führungsanordnung und dem Schubelement eine elektrisch leitende Schmiermasse vorgesehen ist.

4. Widerstandsschweißvorrichtung nach Anspruch 1, 2 oder 3, **dadurch gekennzeichnet, dass** eine Graphit enthaltende Masse zwischen der Führungsanordnung und dem Schubelement als elektrisch leitende Komponente wirksam ist.

5. Widerstandsschweißvorrichtung nach einem der vorhergehenden Ansprüche, **dadurch gekennzeichnet, dass** das Schubelement (20; 120) eine Federanordnung (22) im Kraftübertragungsweg zur beweglichen Elektrode (14) aufweist.

6. Widerstandsschweißvorrichtung nach Anspruch 5, **dadurch gekennzeichnet, dass** auch die Federanordnung (22) als Schweißstrom leitende Komponente im Stromversorgungsweg zwischen der Schweißstromquelle (28) und der bewegbaren Elektrode (14) vorgesehen ist.

7. Widerstandsschweißvorrichtung nach einem der vorhergehenden Ansprüche, **dadurch gekennzeichnet, dass** die Zustelleinrichtung (12; 112) ein Fluidkühlsystem, insbesondere Wasserkühlsystem aufweist.

8. Widerstandsschweißvorrichtung nach einem der vorhergehenden Ansprüche, **dadurch gekennzeichnet, dass** der Motor (16; 32) ein NC-gesteuerter Elektromotor ist.

9. Widerstandsschweißvorrichtung nach einem der vorhergehenden Ansprüche, **dadurch gekennzeichnet, dass** das Schubelement (20) eine entlang einer Zustellachse der Zustelleinrichtung (12) linear verschiebbare Komponente, insbesondere Spindelmutter, eines von dem Motor angetriebenen Spindel-Mutter-Getriebes (18) umfasst.

10. Widerstandsschweißvorrichtung nach Anspruch 5 und Anspruch 9, **dadurch gekennzeichnet, dass** die Federanordnung (22) in Reihe zwischen der linear verschiebbaren Komponente des Spindel-Mutter-Getriebes und der bewegbaren Elektrode (14) in dem Schubelement angeordnet ist.

11. Widerstandsschweißvorrichtung nach einem der vorhergehenden Ansprüche, **dadurch gekennzeichnet, dass** das Schubelement über eine Gleitkontaktanordnung mit einer beim Schweißvorgang Schweißstrom führenden und unbewegten Fläche eines Teils der Zustelleinrichtung, insbesondere mit einer Gehäuseinnenfläche elektrisch verbunden ist.

12. Widerstandsschweißvorrichtung nach einem der vorhergehenden Ansprüche, **dadurch gekennzeichnet, dass** im Stromversorgungsweg zwischen den Schweißelektroden (14, 8) und der Schweißstromquelle (28) Halterungsarme (4, 6) zum Halten der Zustelleinrichtung (12) und der davon gesonderte Schweißelektrode (8) als Schweißstromleitelemente integriert sind.

## Claims

1. Resistance welding device, comprising two welding electrodes (8, 14), arranged opposite one another and connected to a welding current source (28) via a relevant power supply path, for welding weld metal (25) that is to be arranged between the electrodes (8, 14), it being possible to move at least one of the electrodes (14) relative to the other electrode (8) by means of an advancing means (12; 112) from an electrode distance position into a welding position in order to apply a force to weld metal between the electrodes (8, 14) and weld said weld metal in the process, the advancing means (12, 112) comprising a thrust element (20; 120), which is movably guided by means of a guide arrangement in order to move the movable electrode (14) between the electrode distance position and the welding position, and a motor (16; 32), in particular an electric motor, which can be controlled by a controller, as the movement drive means for the thrust element (20; 120), and the movable electrode (14) being fastened to the thrust element (20; 120), the thrust element (20; 120) being formed as a component that conducts welding current and being incorporated in the power supply path between the welding current source (28) and the movable electrode (14), **characterised in that** the guide arrangement is also designed as a component that conducts welding current and is incorporated in the power supply path between the welding current source and the movable electrode, specifically between the welding current source and the thrust element.

2. Resistance welding device according to claim 1, **characterised in that** an electrically conductive brush arrangement, in particular a carbon brush arrangement, is provided for improved current transmission between the guide arrangement and the thrust element.

3. Resistance welding device according to either claim 1 or claim 2, **characterised in that** an electrically conductive lubricant is provided between the guide arrangement and the thrust element.

4. Resistance welding device according to claim 1, claim 2 or claim 3, **characterised in that** a graphite-containing compound between the guide arrangement and the thrust element acts as an electrically conductive component.

5. Resistance welding device according to any of the preceding claims, **characterised in that** the thrust element (20; 120) has a spring arrangement (22) in the force transmission path to the movable electrode (14).

6. Resistance welding device according to claim 5, **characterised in that** the spring arrangement (22) is also provided as a component that conducts welding current in the power supply path between the welding current source (28) and the movable electrode (14).

7. Resistance welding device according to any of the preceding claims, **characterised in that** the advancing means (12; 112) has a fluid cooling system, in particular a water cooling system.

8. Resistance welding device according to any of the preceding claims, **characterised in that** the motor (16; 32) is an NC-controlled electric motor.

9. Resistance welding device according to any of the preceding claims, **characterised in that** the thrust element (20) comprises a component which is linearly displaceable along an advancing axis of the advancing means (12), in particular a spindle nut of a spindle-nut transmission (18) driven by the motor.

10. Resistance welding device according to claim 5 and claim 9, **characterised in that** the spring arrangement (22) is arranged in series between the linearly displaceable component of the spindle-nut transmission and the movable electrode (14) in the thrust element.

11. Resistance welding device according to any of the preceding claims, **characterised in that** the thrust element is electrically connected via a sliding contact arrangement to a surface of part of the advancing means, in particular to a housing inner surface, which surface is stationary and conducts welding current during the welding process.

12. Resistance welding device according to any of the preceding claims, **characterised in that** holding arms (4, 6) for holding the advancing means (12) and the welding electrode (8) separated therefrom are integrated in the power supply path between the welding electrodes (14, 8) and the welding current source (28) as elements which conduct welding current.

## Revendications

1. Dispositif de soudage par résistance, comprenant deux électrodes de soudage (8, 14) disposées l'une en face de l'autre et reliées à une source de courant de soudage (28) par l'intermédiaire d'un trajet d'approche en courant respectif pour le soudage de métal de soudure (25) qui doit être disposé entre les électrodes (8, 14), au moins une des électrodes (14) étant soudée au moyen d'un dispositif d'approche (12 ; 112) par rapport à l'autre électrode (8) d'une position d'espacement des électrodes à une position de soudage afin d'appliquer une force sur le métal soudé entre les électrodes (8, 14) et ainsi le souder, le dispositif d'approche (12 ; 112) comprenant un élément de poussée (20) guidé de manière mobile au moyen d'un dispositif de guidage pour déplacer l'électrode mobile (14) entre la position d'espacement des électrodes et la position de soudage, et un moteur (16 ; 32), en particulier un moteur électrique, qui peut être commandé au moyen d'un dispositif de commande, en tant que moyen d'entraînement de mouvement pour l'élément de poussée (20 ; 120), et dans lequel l'électrode mobile (14) est fixée à l'élément de poussée (20 ; 120), l'élément de poussée (20 ; 120) étant adapté comme un composant conducteur de courant de soudage et étant incorporé dans le trajet d'alimentation en courant entre la source de courant de soudage (28) et l'électrode mobile (14), **caractérisé en ce que** le dispositif de guidage est également adapté comme un composant conducteur de courant de soudage et est incorporé dans le trajet d'alimentation en courant entre la source de courant de soudage et l'électrode mobile, à savoir entre la source de courant de soudage et l'élément de poussée.

2. Dispositif de soudage par résistance selon la revendication 1, **caractérisé en ce qu'**un agencement de balais électriquement conducteur, en particulier un agencement de balais de carbone, est prévu pour améliorer la transmission du courant entre l'agencement de guidage et l'élément de poussée.

3. Dispositif de soudage par résistance selon la revendication 1 ou 2, **caractérisé en ce qu'**une masse lubrifiante électriquement conductrice est prévue entre l'agencement de guidage et l'élément de poussée.

4. Dispositif de soudage par résistance selon la revendication 1, 2 ou 3, **caractérisé en ce qu'**une masse contenant du graphite est efficace entre le dispositif de guidage et l'élément de poussée en tant que composant électriquement conducteur.

5. Dispositif de soudage par résistance selon l'une des revendications précédentes, **caractérisé en ce que** l'élément de poussée (20 ; 120) présente un agencement de ressort (22) dans le trajet de transmission de force vers l'électrode mobile (14).

6. Dispositif de soudage par résistance selon la revendication 5, **caractérisé en ce que** l'agencement de ressort (22) est également prévu comme composant conducteur du courant de soudage dans le trajet d'alimentation en courant entre la source de courant de soudage (28) et l'électrode mobile (14).

7. Dispositif de soudage par résistance selon l'une des revendications précédentes, **caractérisé en ce que** le dispositif d'approche (12 ; 112) possède un système de refroidissement par fluide, en particulier un système de refroidissement par eau.

8. Dispositif de soudage par résistance selon l'une des revendications précédentes, **caractérisé en ce que** le moteur (16 ; 32) est un moteur électrique à commande numérique.

9. Dispositif de soudage par résistance selon l'une des revendications précédentes, **caractérisé en ce que** l'élément de poussée (20) comprend un composant, en particulier un écrou de broche, d'un engrenage broche-écrou (18) entraîné par le moteur, lequel composant est déplaçable linéairement le long d'un axe d'approche du dispositif d'approche (12).

10. Dispositif de soudage par résistance selon la revendication 5 et la revendication 9, **caractérisé en ce que** l'agencement à ressort (22) est disposé en série entre le composant linéairement déplaçable de l'engrenage broche-écrou et l'électrode mobile (14) dans l'élément de poussée.

11. Dispositif de soudage par résistance selon l'une des revendications précédentes, **caractérisé en ce que** l'élément de poussée est relié électriquement par un dispositif de contact glissant à une surface d'une partie du dispositif d'approche, en particulier à une surface intérieure du boîtier, laquelle surface est parcourue par le courant de soudage et est stationnaire pendant le processus de soudage.

12. Dispositif de soudage par résistance selon l'une des revendications précédentes, **caractérisé en ce que** dans le trajet d' alimentation en courant entre les électrodes de soudage (14, 8) et la source de courant de soudage (28), des bras de maintien (4, 6) pour maintenir le dispositif d'approche (12) et l'électrode de soudage (8) séparée de celui-ci sont intégrés comme éléments conducteurs de courant de soudage.
